**Europäisches Patentamt**

**European Patent Office**

**Office européen des brevets**

(11) Publication number: **0 034 674**

**A1**

## (12) EUROPEAN PATENT APPLICATION

(21) Application number: **80300555.2**

(22) Date of filing: **26.02.80**

(51) Int. Cl.³: **F 16 J 15/32**
F 16 C 11/06, B 01 F 15/00
B 65 D 88/64

(43) Date of publication of application:
**02.09.81 Bulletin 81/35**

(84) Designated Contracting States:
**BE DE FR IT NL**

(71) Applicant: **West & Son Engineers Limited**
**65 Sherwood Street Mansfield Woodhouse**
**Nottinghamshire(GB)**

(72) Inventor: **Brown, John Eric**
**65 Sherwood Street**
**Mansfield Woodhouse Nottinghamshire(GB)**

(74) Representative: **Dealtry, Brian et al,**
**Eric Potter & Clarkson 14, Oxford Street**
**Nottingham NG1 5BP(GB)**

(54) Annular sealing element for engaging a spherical surface and its use in a hopper stirring member.

(57) The present invention relates to a seal which is capable of sealing against and rotatably supporting a spherical formation.

The seal 10 has at least one annular lip portion 12 which has at least one sealing surface 18, 19 which is spherically contoured to sealingly engage the spherical formation 40. The lip portion is resilient in an axial direction but rigid enough to resist compressive deformation.

The seal is particularly useful for sealingly supporting a hopper stirring member which extends through a wall of the hopper.

FIG. 2

0034674

SPHERICAL SEAL ELEMENT

The present invention relates to a seal assembly for providing a seal between a spherical surface and a housing, and in particular relates to a seal assembly for providing a seal between a stirring member and the wall of a hopper through which it passes.

When a hopper for receiving particulate material which tends to conglomerate, such as ash, is provided with a valve for closing its outlet, it is possible for the material to form a bridge across the outlet thus preventing the hopper from emptying when the valve is open. In order to break down the bridge and so ensure free passage of the particulate material through the hopper it is known to provide a stirring member which extends from the exterior of the hopper through a wall of the hopper.

The stirring member is usually provided with a spherical formation which is rotatably housed in a seal housing in order to pivotally connect the stirring member to the hopper wall. The seal housing is normally filled with a stuffing material in order to provide a seal so as to prevent dust from escaping from the hopper.

According to one aspect of the present invention there is provided a seal element for sealingly engaging a spherical surface, the seal element having an annular lip portion having a spherically contoured sealing face for contacting the spherical surface.

The lip portion is made of a suitable plastics material which enables the lip portion to be resilient in an axial direction yet rigid enough to resist compressive deformation. Accordingly the seal element, in use, not only provides a sealing function but may also be used to provide a bearing support. Suitable plastics material are polyamides such as Nylatron as produced by Polypenco Limited.

Preferably, the lip portion is provided with more than one sealing face.  Additionally more than one lip portion
may be provided so as to provide a plurality of side sealing
faces.  This has the advantage of increasing the number of
sealing contacts by which the media to be sealed has to pass,
and also increases the surface contact between the seal
element and the spherical surface so that loadings on the seal
element from the spherical surface are evenly distributed
over  large surface area.

Advantageously the or each lip portion is inclined to
the axis of the seal element.

According to another aspect there is provided a seal
assembly including a housing for receiving a member having a
spherical surface and at least one seal element as defined
above  arranged to sealingly engage against the housing and
against the spherical surface when received in the housing.

Preferably, the housing contains a pair of sealing
elements, each sealing element having at least one radially
inwardly directed lip portion defining an aperture which has
a smaller diameter than the spherical surface, the seal
elements being located in oppostion to one another so as
to support the spherical surface therebetween.

Advantageously displacement means are provided to
axially move the opposed seal elements toward one another
thereby inducing a resilient loading on the lip portions.

According to another aspect of the present invention there
is provided a hopper having a stirring member passing through
a wall of the hopper, the stirring member having a spherical formation which is sealingly supported in a seal assembly as
defined above.

Reference is now made to the accompanying drawings,
in which:-

Figure 1     is a broken away perspective view
             of a seal element according to the
             present invention;

Figure 2      is an axial sectional view of the
              seal element of Figure 1;

Figure 3      is an axial section through a seal
              assembly according to the present
              invention;

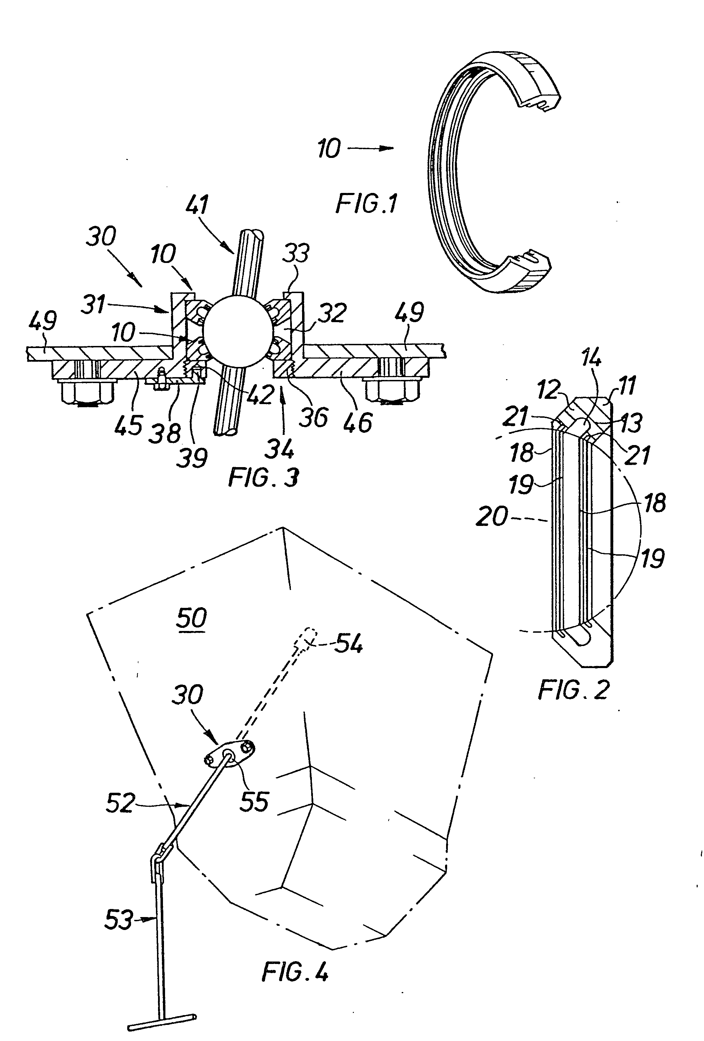

Figure 4      is a schematic perspective view of a
              hopper having a stirring member
              supported in a seal assembly as shown
              in Figure 3.

Referring initially to Figures 1 and 2 there is shown an annular seal element 10 which has a body portion 11 from which radially extends a pair of lip portions 12 and 13. The lip portions 12 and 13 are separated by an annular groove 14 so that each lip portion may be axially deflected. Each lip portion terminates in a pair of sealing faces 18, 19 which are spherically contoured for sealingly engaging a spherical surface 20 as shown in Figure 2. The seal faces 18, 19 are separated by a shallow groove 21.

As clearly seen in Figure 2 each lip portion is inclined to the axis of the seal element so that in use the lip portions are directed toward the centre of the spherical surface being sealed.

The seal element 10 is preferably made in one piece from a suitable plastics material which will enable each lip portion to be resiliently deflected axially but which will resist compressive deformation radially outwardly from the axis of the seal. A suitable plastics material is polyamide such as Nylatron (R.T.M.) as supplied by Polypenco Limited. It is to be appreciated that the seal element may be made from any other material which possesses the necessary characteristics.

In Figure 3 there is shown a seal assembly 3a which includes a housing 31 having an internal bore 32. A shoulder 33 is provided at one end and displacement means 34 in the form of an externally threaded annulus 36 is provided at the other end.

Located between the shoulder 33 and annulus 36 is a pair of opposed seal elements 10 which support therebetween a spherical formation 40 of elongate member 41. The annulus 36 is rotated in order to axially move the opposed seal elements toward one another thereby placing the lip portions under a resilient loading. The annulus 36 is locked in position by a plate member 38 bolted to the exterior of the housing, the plate member 38 having a projection 39 cooperating with bores 42 spaced circumferentially about the annulus 36.

The housing is provided with a pair of flanges 45 and 46 each having bolt holes 47 in order to enable the housing to be bolted to a wall 49.

In Figure 4 a hopper 50 is shown having a stirring member 52 which has a handle 53 at one end and a paddle 54 at the other end. The member 52 has a spherical formation 55 sealingly supported in a seal assembly as shown in Figure 3.

CLAIMS

1.      An annular seal element for sealingly engaging a spherical surface, the element having an annular radially inwardly directed lip portion having a spherically contoured sealing face for contacting the spherical surface, the lip portion being resilient in an axial direction yet rigid enough to resist compressive deformation.

2.      A seal element according to Claim 1 wherein the lip portion is made from a suitable plastics material.

3.      A seal element according to Claim 2 wherein the plastics material is a polyamide.

4.      A seal element according to any preceeding Claim wherein the lip portion is provided with more than one sealing face.

5.      A sealing element according to any preceeding Claim wherein more than one lip portion is provided so as to provide a plurality of side by side sealing surfaces for sealingly contacting the same spherical surface.

6.      A sealing element substantially as described with reference to and as illustrated in the accompanying drawings.

7.      A seal assembly including a housing for receiving a member having a spherical surface and at least one seal element according to any preceeding claim arranged to sealingly engage against the housing and against the spherical surface when received in the housing.

8.      A seal assembly according to Claim 7 wherein the housing contains a pair of sealing elements, each sealing element having at least one radially inwardly directed annulus lip portion defining an aperture which has a smaller diameter than the spherical surface, the seal elements being located in opposition to one another so as to support the spherical surface therebetween.

9.      A seal element according to Claim 8 including displacement means for axially moving the opposed seal elements toward one another for inducing a resilient loading on the lip portions.

10.     A seal assembly substantially as described with reference to and as illustrated in Figure 3 of the accompanying drawings.

11.     A hopper having a stirring member passing through a wall of the hopper, the stirring member having a spherical formation which is sealingly supported in a seal assembly according to Claims 7 to 10.

10 →

**FIG.1**

41

30

10

33

31

10

49

32

49

45 38

42

36 46

39

34

**FIG. 3**

14

12 11

21 13

18 21

19

20 18

19

50

54

30

55

52

53

**FIG.4**

**FIG. 2**

European Patent
Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | F 16 J 15/32 |
| X | FR - A - 1 129 472 (MERLO)<br>* Page 1; figures 1,2 * | 1,2,4<br>6,7 | F 16 C 11/06<br>B 01 F 15/00<br>B 65 D 88/64 |
| X | LE VIDE LES COUCHES MINCES, vol. 199, November-December 1979; pages 431-444<br>Paris, FR.<br>B. BLANC et al.: "Technologie de L'étanchéité"<br><br>* Pages 436-437; paragraph 3.2.1; figure 127 * | 1,2,5-<br>7 | |
| | THE REVIEW OF SCIENTIFIC INSTRUMENTS, vol. 20, January-February 1949,<br>New York, U.S.A.<br>O. RETZLOFF: "A Flexible Vacuum Seal"<br><br>* Page 324; figure 1 * | 1,7,9 | TECHNICAL FIELDS SEARCHED (Int. Cl.³)<br><br>F 16 J<br>B 01 F<br>B 65 D<br>F 16 C |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 29-10-1980 | LEGER |

EPO Form 1503.1   06.78